# EUROPEAN PATENT SPECIFICATION

(11) **EP 0 542 540 B1**
(45) Date of publication and mention of the grant of the patent: **13.01.1999**
(21) Application number: 92310326.1
(22) Date of filing: 12.11.1992
(51) Int. Cl.: H04N 9/87, G11B 20/10

(54) **Playback equalising circuit for a digital magnetic reproducing apparatus**
Entzerrerschaltung an der Wiedergabeseite eines digitalen magnetischen Wiedergabegerätes
Circuit égaliseur de reproduction pour un dispositif de reproduction magnétique numérique

(30) Priority: 12.11.1991 KR 9120051; 12.11.1991 KR 9120053
(43) Date of publication of application: 19.05.1993
(73) Proprietor: SAMSUNG ELECTRONICS CO. LTD., Suwon-city, Kyounggi-do (KR)
(72) Inventor: Yun, Jong-Kyung, Suwon, Kyungki-do (KR)
(74) Representative: Stanley, David William

(56) References cited:
- EP-A- 0 430 811
- JP-A- 3 066 004
- US-A- 4 706 236
- PATENT ABSTRACTS OF JAPAN vol. 007, no. 023 (P-171)29 January 1983 & JP-A-57 176 583 ( TOKYO SHIBAURA DENKI KABUSHIKI KAISHA ) 29 October 1982

## Description

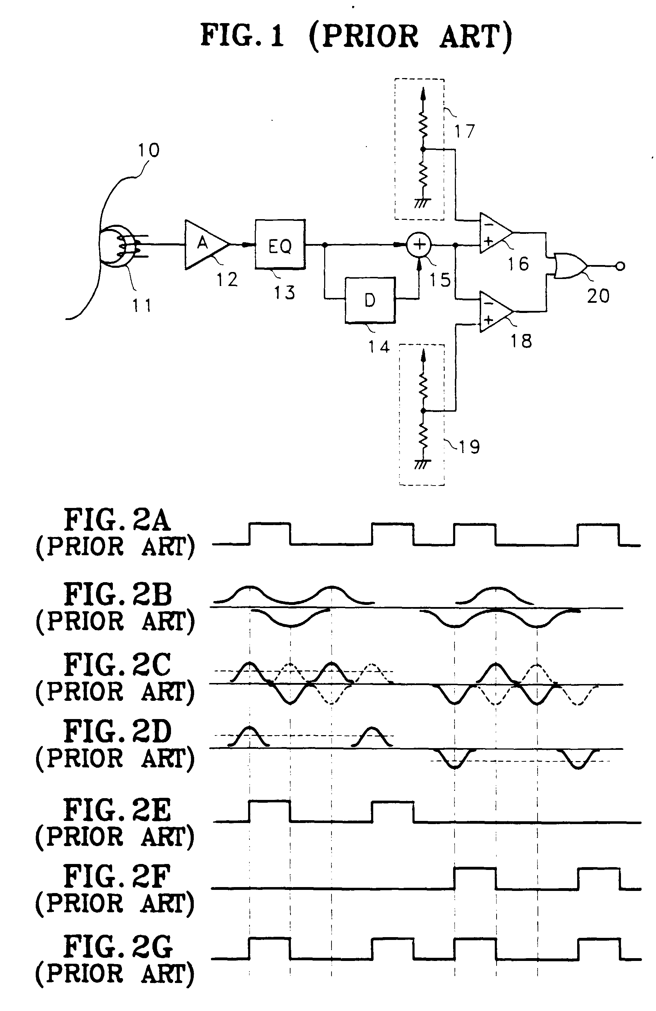

The present invention relates to digital magnetic recording and reproducing, and more particularly to playback equalization. A digital video cassette recorder (hereinafter referred to as a VCR) is an apparatus for converting an analog image signal into a digital image signal, recording the digital signal onto a magnetic tape, and then reproducing the image. The digital data is recorded onto a magnetic tape in the direction of magnetization corresponding to the recording current whose polarity is reversed at the rising and falling edges of a pulse signal. During reproducing, the change of the reproducing current corresponding to the direction of magnetization is detected, and the pulse signal is restored. Also during reproducing, the signal picked up through a playback head is amplified, and then is equalized to be high-frequency-compensated. Then, the original signal and the delayed signal are matched to each other, and the waveform is shaped to be compared with a constant reference voltage, so that the pulse signal is reproduced. A conventional method for reproducing a pulse signal is now explained in detail with reference to Figure 1 of the accompanying diagrammatic drawings.

A conventional playback equalizing circuit illustrated in Figure 1 includes a playback head 11 for converting information recorded on a magnetic tape 10 into an electrical signal, an amplifier 12 for amplifying the signal picked up from the playback head, an equalizer 13 reinforcing the high-frequency component of the playback signal, a delay line 14 for delaying a signal having a reinforced high-frequency component for a predetermined time, an adder 15 for summing the undelayed signal having a reinforced high-frequency component and the signal delayed for a predetermined time, first and second comparators 16 and 18 respectively comparing the first and second reference voltages with the output of the adder, first and second reference voltage generators 17 and 19 for generating first and second reference voltages, and an OR gate 20 for the logical operation of the outputs from the comparators.

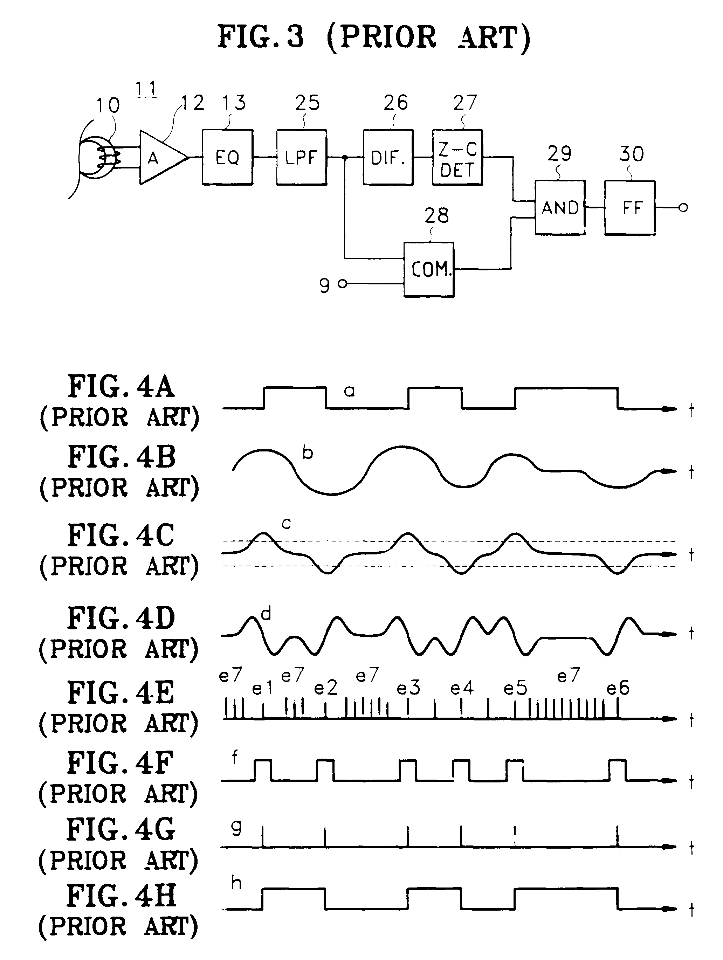

The operation of the playback equalizing circuit constructed as above will be explained with reference to waveforms shown in Figure 2 of the accompanying diagrammatic drawings.

Figure 2A shows the original signal recorded on a magnetic tape. When the digital data recorded on magnetic tape 10 is picked up through playback head 11, the output waveform can be represented as shown in Figure 2B. The high-frequency component of the output waveform is compensated via equalizer 13, and the waveform then appears as shown with solid lines in Figure 2C. (Here, a low-pass filter can be installed in order to remove a low-frequency component among the signals output by equalizer 13). The frequency-compensated signal (represented as solid lines) is delayed through a delay line 14, to become the waveform represented by dotted lines (Figure 2C). The solid-line waveform output from equalizer 13 and the dotted-line waveform output from delay line 14 are summed in adder 15, thereby eliminating the out-of-phase portions. The result is output as shown in Figure 2D. The waveform of Figure 2D is simultaneously supplied to the non-inverting input terminal of first comparator 16, to be compared with the first reference voltage of first reference voltage generator 17 which is supplied to the inverting input terminal, and the inverting input of second comparator 18, to be compared with the second reference voltage of second reference voltage generator 19. The output waveform of first comparator 16 is represented in Figure 2E, and Figure 2F is that of second comparator 18. The OR gate 20 OR-operates the output waveforms of the first and second comparators as shown in Figures 2E and 2F, to output a waveform as shown in Figure 2G.

Also, a differential method illustrated in Figure 3 of the accompanying diagrammatic drawings is used as another method for extracting such a digital signal, which differentiates the signal reproduced from a head, distinguishes the rising or falling edges of the digital signal by detecting the zero-crossing points of the differentiated signal, and restores the waveform of the digital signal. An apparatus using the differential method includes a differentiator 26 for differentiating the output signal of equalizer 13 without using the delay line 14 of Figure 1, a zero-crossing detector 27 for detecting the zero-crossing points of the differentiated signal, a voltage comparator 28 for outputting a peak value according to the value obtained by comparing the reference voltage and the output signal of equalizer 13, an AND operator 29 for AND-operating the output signal of voltage comparator 28, and the output signal of zero-crossing detector 27, and a flip-flop 30 for reproducing the original digital signal by means of the output of AND operator 29, thereby reproducing a signal.

The operation of the playback equalizing circuit according to such a conventional differentiating method will be explained in reference to the waveforms of Figure 4 of the accompanying diagrammatic drawings.

Figure 4A shows the waveform of a recorded digital signal, and Figure 4B that of the pick-up signal output from a playback head. Figure 4C shows the signal after its high-frequency component is reinforced by the equalizer, and Figure 4D is the differentiated signal shown in Figure 4C. Figure 4E is a zero-crossing pulse signal which represents the extracted zero-crossing points of the differentiated signal, which includes pulses el through e6 generated at a point where the recorded digital signal corresponds to rising or falling edges, and pulse e7 generated by a similar zero-crossing according to a noise component. Figure 4F is a gate signal generated by voltage comparator 28 comparing the output of low-pass filter 25 with the voltage supplied to the reference voltage terminal and outputting peak value. Figure 4G is a zero-crossing pulse signal resulting from the AND operation of the zero-crossing pulse signal and a gate signal by AND operator 29, wherein pulse e7 from a similar zero-crossing is removed. This signal drives a flip-flop 30 to obtain a restored digital signal as shown in Figure 4H.

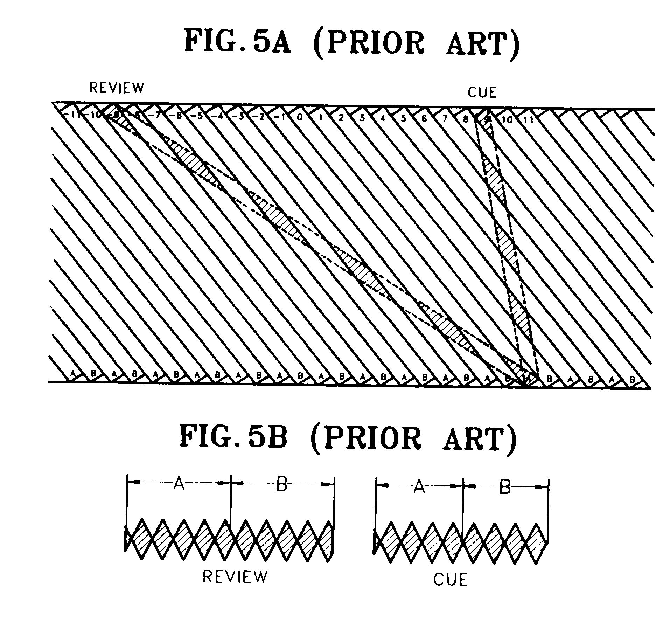

Although such an apparatus for reproducing a signal experiences no problems while reproducing an ordinary signal, it does so when reproducing at a variable speed, that is, when a special function is required. Such a problem will be described with reference to Figures 5A and 5B of the accompanying diagrammatic drawings.

Figure 5A is a diagram showing a trace of review or cue operation of a playback head scanning a tape, and Figure 5B shows envelope waveforms of the picked-up signal of Figure 5A. As shown in Figure 5B, the picked-up signal during special reproducing exhibits a remarkable reduction in the amplitude of the front and rear parts of its scanning period as compared with the central portion thereof. Such phenomena is generated because the head traverses and scans the track where signals on a tape are recorded, and is unavoidable in a rotary-magnetic-head-drum-type recording and reproducing apparatus. When such a signal is input to a reproducing apparatus such as those illustrated in Figures 1 or 3, the amplitude of a high frequency component thereof is unstable, so that the signal is much weaker than the reference voltage. Therefore, the signal is difficult to reproduce, and sometimes cannot be reproduced at all. Accordingly, in the case of a special reproducing, in order to reproduce the recorded signal, it is necessary to lengthen a valid term of a picked-up signal to reproduce the amplitude of the front and rear parts of the picked-up signal to be equal to that of its central part. Also, since in such a playback equalizing circuit, during reproducing at a variable speed, a playback head traverses and scans a plurality of tracks on a magnetic tape, and the level of a reproduced high-frequency signal becomes unstable, it is difficult to reproduce a signal accurately when compared by means of a constant reference voltage, and thereby may render reproduction impossible. Accordingly, during reproducing at a variable speed, it is necessary to respond to a reproduced signal, control the reference voltage level, and stabilize the playback characteristics.

Other relevant prior art documents are JP-A-3,066,004, patent abstracts of Japan Volume 7, No. 23 (P171) & JP-A-57 176 583 and EP-A-0 430 811. The first of these three documents discloses a reading circuit for use with a floppy disk unit whereby signals read by a magnetic head are differentiated by differentiating circuit and also applied in parallel to a level slicer. The output of the level slicer is conveyed to a delay circuit which controls the operation of a comparator. The comparator has a second input which is supplied by the output of the differentiating circuit and has an output which leads to a pulse shaping circuit. The second document discloses a play back equalizing circuit with an AGC circuit for providing a uniform signal level under variable speed conditions. The third document discloses a similar circuit having means for determining a reference voltage level input to a comparator. The change in reference level depends upon the detection of a "trial write" area of code to provide a reference pattern for ensuring correct discrimination of reference level.

Preferred embodiments of the present invention aim to provide an apparatus for improving the quality of a reproduced signal during a special playback such as a high-speed search, in order to solve the problem of the prior art.

Another aim is to provide an apparatus for lengthening the valid term of a picked-up signal of a digital magnetic recording and reproducing apparatus.

A further aim is to provide an apparatus capable of stabilizing the playback characteristics by responding to the reproduced signal of a digital magnetic recording and reproducing apparatus during reproducing at a variable speed, and controlling the reference voltage level. That is, the aim is to stably reproduce a signal by controlling the reference voltage level and the envelope level in order to stabilize the playback characteristics.

According to an aspect of the invention, there is provided a playback equalizing circuit for a digital magnetic reproducing apparatus, the circuit comprising: a signal processing unit for equalizing, delaying and waveform-shaping a signal picked up from a magnetic tape via a playback head; a signal outputting unit for comparing a signal processed in the signal processing unit with a predetermined reference signal and outputting a result of the comparison; and a reference signal controlling unit, the circuit being characterized in that the reference signal controlling unit includes envelope detecting means for detecting an envelope of the signal from the magnetic tape for responding to the level of the picked up signal and controlling the predetermined reference signal accordingly, the reference signal controlling unit being active during a variable speed playback mode but being deselected during a normal playback mode, so that during such a normal playback mode, a level of the predetermined reference signal is not controlled by the reference signal controlling unit.

Preferably, said reference signal controlling unit further comprises delaying means for matching the output of the detecting means to the output of the signal processing unit; and
outputting means for supplying the output of said delaying means to a reference voltage supplying unit of said signal outputting unit.

Preferably, said outputting means comprises first and second amplifiers.

Said reference voltage supplying unit may comprise a first reference voltage supplier and a second reference voltage supplier.

Said signal outputting unit preferably comprises a first comparator, a second comparator, first and second flip-flops and an OR gate, said first comparator having an inverting input for receiving a reference voltage generated by the first reference voltage supplier and a non-inverting input being adapted to receive a signal from the signal processing unit, said second comparator also having an inverting input and a non-inverting input, the inverting input of said second comparator being arranged to be connected to said waveform shaping unit and the non-inverting input of said second comparator being arranged to receive a second reference voltage generated by said second reference voltage generating unit, the output of said first comparator being connected to the input of said first flip-flop, the output of said second comparator being connected to the input of said second flip-flop and the outputs of said first and second flip-flops being connected to first and second inputs of the OR gate.

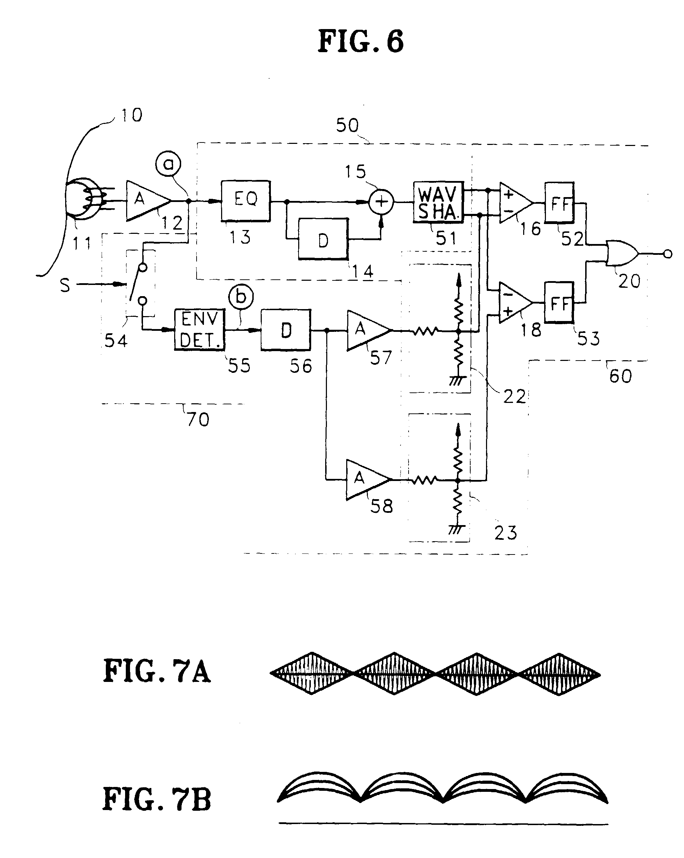

For a better understanding of the invention, and to show how the same may be carried into effect, reference will now be made, by way of example, to Figures 6, 7A and 7B, of the accompanying diagrammatic drawings, in which:
Figure 6 is a structural diagram showing one embodiment of a playback equalizing circuit of a digital magnetic recording and reproducing apparatus according to the present invention; and
Figures 7A and 7B respectively show a playback high-frequency signal waveform and an operational waveform of a playback high-frequency signal during high-speed search of the circuit of Figure 6.
Figure 6 shows a playback equalizing circuit of a digital VCR capable of improving the playback characteristics of a signal by controlling a reference voltage level. The playback equalizing circuit comprises a signal processing unit 50, a signal outputting unit 60, and a reference signal controlling unit 70. In signal processing unit 50, which receives a signal picked up from a magnetic tape 10 via a playback head 11 and amplified by an amplifier 12, an equalizer 13 reinforces the high-frequency component of the signal, a delay line 14 delays the signal, an adder 15 sums the original signal and the delayed signal, and a waveform-shaper 51 shapes the combined signal and outputs it to signal outputting unit 60.

Signal outputting unit 60 includes a first comparator 16, a first reference voltage supplier 22, a second comparator 18, a second reference voltage supplier 23, first and second flip-flops 52 and 53, and an OR gate 20, and ultimately restores the processed video signal into the original signal. Here, if an input signal voltage is higher than the reference voltage of first reference voltage supplier 22, first comparator 16 outputs a first pulse signal via first flip-flop 52. Conversely, if an input signal voltage is lower than the reference voltage of second reference voltage supplier 23, second comparator 18 outputs the second pulse signal via second flip-flop 53. The first and second pulse signals are processed by OR gate 20 to be output.

A reference signal controlling unit 70 includes a switch 54, an envelope detector 55, a delayer 56, and amplifiers 57 and 58. Reference signal controlling unit 70 receives an amplified signal (the waveform of Figure 7A) via a switch 54 which is "on" during variable-speed reproducing. Envelope detector 55 detects the envelope of the input signal (the waveform of Figure 7B), and then the detected signal is timing-matched with a playback signal via delay line 56. The signal is fed to first reference voltage supplier 22 via amplifier 57, and fed to second reference voltage supplier 23 via amplifier 58.

Accordingly, the reference voltage level is automatically controlled to correspond to the operational line of the playback signal, so that the playback apparatus can prevent unstable playback equalizing characteristics by the level variation of a playback signal during variable-speed reproducing such as a high-speed search. Therefore, even though the level variation of a playback signal is severe during high-speed reproduction in a digital VCR, the playback characteristics can be improved during a high-speed search by controlling a stable reference voltage in response to the level variation.

By controlling the envelope level as above, during reproducing at a variable speed, the RF envelope waveform of the picked-up signal output from the head is improved in such a manner that the amplitude of its peripheral portion is corrected to be almost equal to that of the central portion per track scanning period, so that the valid term where the recorded data can be reproduced is lengthened, thereby improving the quality of the reproduced signal.

The invention is not restricted to the details of the foregoing embodiment(s).

## Claims

1. A playback equalizing circuit for a digital magnetic reproducing apparatus, the circuit comprising:
a signal processing unit (50) for equalizing, delaying and waveform-shaping a signal picked up from a magnetic tape (10) via a playback head (11);
a signal outputting unit (60) for comparing a signal processed in the signal processing unit (50) with a predetermined reference signal and outputting a result of the comparison; and
a reference signal controlling unit (70), the circuit being characterized in that the reference signal controlling unit includes envelope detecting means (55) for detecting an envelope of the signal from the magnetic tape for responding to the level of the picked up signal and controlling the predetermined reference signal accordingly, the reference signal controlling unit (70) being active during a variable speed playback mode but being deselected during a normal playback mode, so that during such a normal playback mode, a level of the predetermined reference signal is not controlled by the reference signal controlling unit (70).

2. A playback equalizing circuit as claimed in claim 1, wherein said reference signal controlling unit (70) further comprises delaying means for matching the output of the detecting means (55) to the output of the signal processing unit (50); and
outputting means for supplying the output of said delaying means (56) to a reference voltage supplying unit of said signal outputting unit (60).

3. A playback equalizing circuit according to claim 2, wherein said outputting means comprises first and second amplifiers (57, 58).

4. A playback equalizing circuit according to claim 3, wherein said reference voltage supplying unit comprises a first reference voltage supplier (22) and a second reference voltage supplier (23).

5. A playback equalizing circuit according to claim 4, wherein said signal outputting unit (60) comprises a first comparator (16), a second comparator (18) first and second flip-flops (52, 53) and an OR gate (20), said first comparator (16) having an inverting input an for receiving a reference voltage generated by the first reference voltage supplier (22) and a non-inverting input being adapted to receive a signal from a waveform shaping unit (51) included in the signal processing unit (50), said second comparator also having an inverting input and a non-inverting input, the inverting input of said second comparator being arranged to be connected to said waveform shaping unit and the non-inverting input of said second comparator being arranged to receive a second reference voltage generated by said second reference voltage generating unit, the output of said first comparator (16) being connected to the input of said first flip-flop (52), the output of said second comparator (18) being connected to the input of said second flip-flop (53) and the outputs of said first and second flip-flops (52, 53) being connected to first and second inputs of the OR gate (20).

## Patentansprüche

1. Playback-Ausgleichsschaltkreis für ein digitales, magnetisches Wiedergabegerät, wobei der Schaltkreis aufweist:
eine Signalverarbeitungseinheit (50) zum Ausgleichen, Verzögern und Wellenform-Formen eines Signals, das von einem Magnetband (10) über einen Wiedergabekopf (11) aufgenommen ist;
eine Signalausgabeeinheit (60) zum Vergleichen eines Signals, das in der Signalverarbeitungseinheit (50) verarbeitet ist, mit einem vorbestimmten Referenzsignal und Ausgeben eines Ergebnisses des Vergleichs; und
eine Referenzsignal-Steuereinheit (70), wobei der Schaltkreis dadurch gekennzeichnet ist, daß die das Referenzsignal steuemde Einheit eine Umhüllungserfassungseinrichtung (55) zum Erfassen einer Umhüllung des Signals von dem Magnetband zum Ansprechen auf den Pegel des aufgenommenen Signals und zum Steuern des vorbestimmten Referenzsignals entsprechend umfaßt, wobei die Referenzsignal-Steuereinheit (70) während eines Playback-Modus mit variabler Geschwindigkeit aktiv ist, allerdings während eines normalen Playback-Modus nicht ausgewählt wird, so daß während eines solchen normalen Playback-Modus ein Pegel des vorbestimmten Referenzsignals nicht durch die Referenzsignal-Steuereinheit (70) gesteuert wird.

2. Playback-Ausgleichsschaltkreis nach Anspruch 1, wobei die Referenzsignal-Steuereinheit (70) weiterhin eine Verzögerungseinrichtung zum Anpassen des Ausgangs der Erfassungseinrichtung (55) an den Ausgang der Signalverarbeitungseinheit (50); und
eine Ausgabeeinrichtung zum Zuführen des Ausgangs der Verzögerungseinrichtung (56) zu einer eine Referenzspannung zuführenden Einheit der Signalausgabeeinheit (60); aufweist.

3. Playback-Ausgleichsschaltkreis nach Anspruch 2, wobei die Ausgabeeinrichtung einen ersten und einen zweiten Verstärker (57, 58) aufweist.

4. Playback-Ausgleichsschaltkreis nach Anspruch 3, wobei die die Referenzspannung zuführende Einheit eine erste Referenzspannungs-Zuführeinrichtung (22) und eine zweite Referenzspannungs-Zuführeinrichtung (23) aufweist.

5. Playback-Ausgleichsschaltkreis nach Anspruch 4, wobei die Signalausgabeeinheit (60) einen ersten Komparator (16), einen zweiten Komparator (18), ein erstes und ein zweites Flip-Flop (52, 53) und ein ODER-Gatter (20) aufweist, wobei der erste Komparator (16) einen invertierenden Eingang zum Aufnehmen einer Referenzspannung, die durch die erste Referenzspannungs-Zuführeinrichtung (22) erzeugt ist, und einen nicht invertierenden Eingang, der dazu angepaßt ist, ein Signal von einer eine Wellenform formenden Einheit (51) aufzunehmen, die in der Signalverarbeitungseinheit (50) enthalten ist, besitzt, wobei der zweite Komparator auch einen invertierenden Eingang und einen nicht invertierenden Eingang besitzt, wobei der invertierende Eingang des zweiten Komparators so angeordnet ist, um mit der die Wellenform formenden Einheit verbunden zu sein, und der nicht invertierende Eingang des zweiten Komparators so angeordnet ist, um eine zweite Referenzspannung, die durch die die zweite Referenzspannung erzeugende Einheit erzeugt ist, aufzunehmen, wobei der Ausgang des ersten Komparators (16) mit dem Eingang des ersten Flip-Flops (52) verbunden ist und wobei der Ausgang des zweiten Komparators (18) mit dem Eingang des zweiten Flip-Flops (53) verbunden ist und die Ausgänge des ersten und des zweiten Flip-Flops (52, 53) mit dem ersten und dem zweiten Eingang des ODER-Gatters (20) verbunden sind.

## Revendications

1. Circuit égaliseur de reproduction pour un appareil de reproduction magnétique numérique, le circuit comprenant:
une unité de traitement de signal (50) pour égaliser, retarder et mettre en forme l'onde d'un signal lu dans une bande magnétique (10) par l'intermédiaire d'une tête de reproduction (11);
une unité de sortie de signal (60) pour comparer un signal traité dans l'unité de traitement de signal (50) à un signal de référence prédéterminé et fournir un résultat de la comparaison; et
une unité de commande de signal de référence (70), le circuit étant caractérisé en ce que l'unité de commande de signal de référence inclut un moyen de détection d'enveloppe (55) pour détecter une enveloppe du signal provenant de la bande magnétique afin de répondre au niveau du signal lu et commander de manière correspondante le signal de référence prédéterminé, l'unité de commande de signal de référence (70) étant active pendant un mode de reproduction à vitesse variable, mais n'étant pas sélectionnée pendant un mode de reproduction normal, de façon que pendant un tel mode de reproduction normal, un niveau du signal de référence prédéterminé n'est pas commandé par l'unité de commande de signal de référence (70).

2. Circuit égaliseur de reproduction selon la revendication 1, dans lequel ladite unité de commande de signal de référence (70) comprend également un moyen de retard pour faire coïncider la sortie du moyen de détection (55) avec la sortie de l'unité de traitement de signal (50); et un moyen de sortie pour fournir la sortie dudit moyen de retard (56) à une unité d'alimentation de tension de référence de ladite unité de sortie de signal (60).

3. Circuit égaliseur de reproduction selon la revendication 2, dans lequel ledit moyen de sortie comprend des premier et second amplificateurs (57, 58).

4. Circuit égaliseur de reproduction selon la revendication 3, dans lequel ladite unité d'alimentation de tension de référence comprend un premier élément de fourniture de tension de référence (22) et un second élément de fourniture de tension de référence (23).

5. Circuit égaliseur de reproduction selon la revendication 4, dans lequel ladite unité de sortie de signal (60) comprend un premier comparateur (16), un second comparateur (18), des première et seconde bascules (52, 53) et une porte OU (20), ledit premier comparateur (16) ayant une entrée inverseuse pour recevoir une tension de référence produite par le premier élément de fourniture de tension de référence (22) et une entrée non-inverseuse qui est adaptée pour recevoir un signal provenant d'une unité de mise en forme d'onde (51) incluse dans l'unité de traitement de signal (50), ledit second comparateur ayant aussi une entrée inverseuse et une entrée non-inverseuse, l'entrée inverseuse dudit second comparateur étant prévue pour être connectée à ladite unité de mise en forme d'onde et l'entrée non-inverseuse dudit second comparateur étant prévue pour recevoir une seconde tension de référence produite par ledit second élément de fourniture de tension de référence, la sortie dudit premier comparateur (16) étant connectée à l'entrée de ladite première bascule (52), la sortie dudit second comparateur (18) étant connectée à l'entrée de ladite seconde bascule (53) et les sorties desdites première et seconde bascules (52, 53) étant connectées à des première et seconde entrées de la porte OU (20).
